Europäisches Patentamt

European Patent Office

Office européen des brevets

(19)

(11) Veröffentlichungsnummer: **0 020 974**
**B1**

(12)

# EUROPÄISCHE PATENTSCHRIFT

(45) Veröffentlichungstag der Patentschrift: **08.02.84**

(51) Int. Cl.³: **B 41 M 5/20**

(21) Anmeldenummer: **80102563.6**

(22) Anmeldetag: **09.05.80**

(54) In Wasser gelöste elektrochrome Druckfarbe und Verfahren zum Drucken mit dieser Druckfarbe.

(30) Priorität: **24.05.79 US 42177**

(43) Veröffentlichungstag der Anmeldung:
**07.01.81 Patentblatt 81/1**

(45) Bekanntmachung des Hinweises auf die Patenterteilung:
**08.02.84 Patentblatt 84/6**

(84) Benannte Vertragsstaaten:
**DE FR GB**

(56) Entgegenhaltungen:
**DE - C - 511 165**
**FR - A - 2 309 345**

(73) Patentinhaber: **International Business Machines**
**Corporation**
**Old Orchard Road**
**Armonk, N.Y. 10504 (US)**

(72) Erfinder: **Sambucetti, Carlos Juan**
**4 Sassi Drive**
**Croton-on-Hudson, New York 10520 (US)**

(74) Vertreter: **Rudack, Günter O., Dipl.-Ing.**
**c/o International Business Machines Corporation**
**Zurich Patent Operations Säumerstrasse 4**
**CH-8803 Rüschlikon (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

In Wasser gelöste elektrochrome Druckfarbe und Verfahren zum Drucken mit dieser Druckfarbe

Die Erfindung betrifft eine in Wasser gelöste elektrochrome Druckfarbe und ein Verfahren zum Drucken mit dieser Druckfarbe, wobei sich nicht verbrauchende Ekektroden verwandt werden.

Beim elektrolytischen Drucken gibt es im wesentlichen zwei Schemata für den Druckprozeß. Beim ersten Schema werden Metallionen von einer der Elektroden in den Aufzeichnungsträger übertragen und dort mit bereits in dem Aufzeichnungsträger vorhandenen farblosen Materialien kombiniert, um farbige Komplexe zu bilden, oder sie werden als feine Metallpartikel ausgefällt. Beispiele für dieses Schema sind in den USA Patentschriften Nummer 3 951 757 und 4 035 244 beschrieben. Bei diesem Schema sind die Elektroden selbstverständlich nach einiger Zeit verbraucht.

Bei dem zweiten Schema werden die Elektroden nicht verbraucht, da hierbei das Drucken lediglich durch die elektrolytische Veränderung von bereits in dem Aufzeichnungsträger vorhandenen Materialien erfolgt. Dabei wird von der Stärke-Jod-Reaktion Gebrauch gemacht, um das Drucken zu bewirken. Im Prinzip wird bei diesem Schema durch die Elektrolyse von Kaliumjodid oder einem anderen Jodid im Papier freies Jod erzeugt, welches mit der Stärke reagiert, die auch in dem Papier vorhanden ist, wodurch der allgemein bekannte purpurne Stärke-Jod-Komplex gebildet wird. Der dieses Schema benutzende Druckprozeß ist sehr empfindlich, so daß lediglich Ströme in der Größenordnung von 5—50 mÅ benötigt werden, um ein ausreichend dichtes Bild zu erzeugen. Dieses Schema ist beispielsweise in der USA Patentschrift 3 655 527 beschrieben.

Aus der deutschen Patentschrift 511 165 ist ein Verfahren zur Herstellung von Empfangspapier für elektrische Fernschreibgeräte bekannt, bei dem dem Papier vor, bei oder nach der Tränkung mit der jodidhaltigen Lösung alkalisch wirkende Stoffe zugesetzt werden, wodurch die Haltbarkeit des Papiers erhöht wird.

Zu der zweiten Klasse gehört auch ein elektrolytisches Trockendruckverfahren bei welchem ein spezielles Papier benutzt wird, das eine oder zwei metallisierte Schichten aufweist.

Dem zuletzt genannten Schema haften verschiedene Nachteile an. Einerseits verlangt es teures Papier mit mehreren speziellen Materialschichten und andererseits ist eine Spannung von mehr als 100 Volt zum Drucken erforderlich. Darauf wird in der USA Patentschrift Nummer 3 511 700 hingewiesen. Das zuerst genannte Schema hat natürlich den Nachteil, daß die Schreibelektrode während des Betriebes verbraucht wird. Dadurch werden komplizierte Druckkopfmechanismen nötig, bei denen eine Vorschubvorrichtung dafür sorgen muß, daß die Schreibelektrode in Arbeitsstellung bleibt. Das zweite Schema leidet unter dem Nachteil, daß der Druck ausbleicht und das Aufzeichnungsmaterial sich bei Lagerung verfärbt.

Aufgabe der vorliegenden Erfindung ist die Bereitstellung einer in Wasser gelösten elektrochromen Druckfarbe für das elektrolytische Drucken, der die zuvor beschriebenen Nachteile des Standes der Technik nicht anhaften. Diese Druckfarbe eignet sich für den Gebrauch in einem elektrolytischen Druckprozeß, bei dem die Elektroden nicht verbraucht werden und auf gewöhnlichem Papier gedruckt werden kann.

Die Aufgabe der Erfindung wird gelöst durch eine in Wasser gelöste elektrochrome Druckfarbe, enthaltend

a) ein Jodid als farbbildendes Agens,
b) ein Bromid zum Katalysieren der Oxidation des Jodids,
c) eine Verbindung, die mit dem bei der Oxidation gebildeten Jod ein Clathrat bildet und
d) einen Entfärbungsinhibitor aus der Gruppe von Kaliumfluorid, Natriumfluorid, Ammoniumfluorid und Salzen der Äthylendiamintetraessigsäure.

Beim elektrolytischen Drucken war es schon bekannt, Jodidlösungen für die Bildung von farbigen Markierungen zu benutzen. Gemäß dem Stand der Technik werden Jodidlösungen direkt zu Jod elektro-oxidiert. Wie bereits angedeutet, haftet diesem Vorgehen der Nachteil des Verblassens der farbigen Markierungen an, wozu noch die Langsamkeit der Reaktion und die Papierverfärbung hinzutreten. Um diese Probleme mit der Verfärbung zu überwinden, wurde nach dem Stand der Technik die Jodidkonzentration auf weniger als 1% Jodid gesenkt. Dabei ergab sich, daß die Markierungen verblaßten und die Reaktion weiter verlangsamt wurde. Andererseits stellte sich bei Erhöhung der Jodidkonzentration über 1% das Problem der Verfärbung wieder ein. Diese Probleme werden bei der vorliegenden Erfindung durch die Verwendung eines elektrokatalytischen Reagens vermieden, mit dem die Oxidation des Jodids zu Jod gesteuert wird.

Es wurde festgestellt, daß bei einer elektrokatalytischen Reaktion nach der Erfindung anstelle der direkten Elektrooxidation des Jodids extrem kleine Jodkonzentrationen verwendet werden können, ohne daß sich das vom Stand der Technik her bekannte Problem des nachträglichen Verblassens einstellt. Außerdem wird das Problem der Verfärbung vermieden und gleichzeitig die Reaktionsgeschwindigkeit über die aus dem Stand der Technik bekannte erhöht. Bei der praktischen Herstellung der Druckfarbe gemäß der Erfindung wird ein Bromid zu einer ein Jodid enthaltenden Druckflüssigkeit hinzugefügt, um als Katalysator für die Elektrooxidation zu dienen. Das Bromid, welches am Ende des Verfahrens unverändert vorliegt, verbraucht den gesamten zugeführten Strom. Als Bromid kann eines der üblichen Bromide gewählt werden, wie beispielsweise Ammoniumbromid, Kaliumbromid, Natriumbromid. Es ist vorzugsweise soviel Bromid vorhanden, daß sich ein $Br^-/I^-$-Molverhältnis von 5 zu 1 bis 50 zu 1 einstellt.

Es scheint, daß beim Zuführen eines Stromimpulses zu dem Aufzeichnungsträger, auf dem sich die Druckfarbe gemäß der vorliegenden Erfindung befindet, die folgende Reaktion stattfindet:

$$2\ Br^- \rightarrow 2\ Br^\cdot + 2\ e$$
(durch Stromimpuls oxidiert)

$$2\ Br^\cdot + 2\ I^- \rightarrow 2\ Br^- + I_2$$
(chemisch oxidiert)

Die oben angegebene Reaktion findet an der positiven Elektrode statt, wobei das Kation an der negativen Elektrode entladen wird. In bevorzugten Ausführungsbeispielen der Erfindung liegt das optimale Molverhältnis $Br^-/I^-$ zwischen 15 und 40 zu 1.

Zur Verbesserung der Stabilität der gedruckten Zeichen wird eine Substanz vorgesehen, die mit Jod eine unlösliche Verbindung oder ein Clathrat bildet. Diese Substanz kann aus der folgenden Verbindungen umfassenden Gruppe ausgewählt werden: Harnstoff, Amylose, Chinin, Polyarylphosphate und Polyarylborate, wie beispielsweise Natriumphenylborat und Natriumbiphenylphosphat. Die Substanz kann in Mengen von 0,2 bis 5 Gewichtsprozent, bezogen auf das Gewicht der Lösung, vorhanden sein.

Das farbbildende Agens in der Druckfarbe ist das Jodid, welches, wie oben ausgeführt, zu Jod oxidiert wird. Das Jodid kann aus der Gruppe Kaliumjodid, Natriumjodid, Ammoniumjodid ausgewählt werden. Vorzugsweise werden Tetraalkylammoniumjodid-Verbindungen benutzt. Es hat sich ergeben, daß bei Verwendung dieser Verbindungen weniger Verlaufen oder "Ausbluten" der gedruckten Zeichen vorkommt. Trimethylphenylammoniumjodid, Acetylcholinjodid und Propionylcholinjodid sind ebenfalls bevorzugte Verbindungen. Es scheint, daß diese Verbindungen die Viskosität der Druckfarbe in der unmittelbaren Umgebung der Papierfasern erhöhen.

Der Anteil des Jodids an der Druckfarbe kann zwischen 0,2 und 5 Gewichtsprozent, bezogen auf das Gewicht der Lösung, ausmachen.

Falls das Papier vor dem Bedrucken mit der Druckfarbe überzogen und gelagert werden soll, ist es nötig sicherzustellen, daß keine Verfärbung eintreten kann. Wie bereits erwähnt, wird dieses Problem vor allem dadurch gelöst, daß extrem niedrige Jodidkonzentrationen zur Anwendung gelangen. Jedoch kann auch bei diesen geringen Konzentrationen eine Verfärbung durch aktinisches Licht eintreten. Um diesem Problem der Verfärbung abzuhelfen, wird der Druckfarbe ein Fluorid oder eine andere komplexbildende Verbindung aus der Gruppe von Kaliumfluorid, Natriumfluorid, Ammoniumfluorid und den Salzen der Äthylendiamintetraessigsäure beigefügt.

Weiterhin können Farbverstärker wie Leukomethylenblau und seine Derivate, Leuko-kristallviolett und 4,4'-Methylen-bis-N-N'-dimethylanilin, die alle dazu tendieren, mit dem Jod Additionsverbindungen zu bilden und dadurch die gedruckten Zeichen zu stabilisieren, zugegeben werden. Der pH-Wert der Druckfarbe wird durch Zugabe von Phosphatpuffer auf einen Wert zwischen 6,5 und 8,5 eingestellt.

Die oben genannten Verbindungen werden in Wasser gelöst. Alkohol kann zugegeben werden, um die Flüchtigkeit der Druckfarbe zu erhöhen. Die fertige Druckfarbe kann auf jedes gewöhnliche Papier durch Sprühen oder eine andere Technik aufgebracht werden. Der Auftrag kann kurz vor dem Drucken erfolgen. Das mit der Druckfarbe behandelte Papier kann aber auch für zukünftigen Gebrauch eingelagert werden.

Das Drucken kann durch einen konventionellen elektrolytischen Druckkopf erfolgen. Es werden darin sich nicht verbrauchende Elektroden benutzt. Wenn die vorstehend beschriebene Druckfarbe gemäß der Erfindung benutzt wird, genügt eine Schreibspannung von zwischen 10 und 30 Volt. Der Betriebs-pH-Wert der Druckfarbe liegt zwischen 6,5 und 8,5. Die nachfolgend aufgeführten Beispiele dienen der näheren Illustration der Erfindung und sind nicht als Einschränkung aufzufassen.

Beispiel I

Eine Druckfarbe wird hergestellt durch Lösen von 9 g Ammoniumbromid oder Kaliumbromid, 0,5 g Kaliumjodid, 2 g Kaliumfluorid und 1,4 g Kaliumphenylphosphat in 100 ml Wasser. Durch Zusatz von Natriumhydroxid wird der pH-Wert auf etwa 8 eingestellt. Die Druckfarbe wird dann filtriert und durch Sprühen auf gewöhnliches Papier aufgetragen. Das Bedrucken des vorbehandelten Papiers erfolgt durch Anlegen einer Spannung von etwa 20 Volt in einem vorbestimmten Muster senkrecht zur Fläche des Papiers. Die gedruckten Zeichen sind dunkelblau.

Beispiel II

Eine Druckfarbe wird hergestellt durch Lösen von 4 g Ammoniumbromid, 5 g Kaliumbromid, 0,3 g Kaliumjodid, 2 g Kaliumfluorid und 2 g Harnstoff in 100 ml Wasser. Die Flüssigkeit wird durch Zugabe von Natriumhydroxid auf einem pH-Wert von etwa 8 eingestellt.

Die Flüssigkeit wird wie beim ersten Beispiel auf gewöhnliches Papier aufgesprüht. Die gedruckten Zeichen erscheinen in Sepia.

Beispiel III

Die Druckfarbe wird entsprechend dem Bei-

spiel II bereitet, mit der Ausnahme, daß der Harnstoff teilweise durch Amylose und das Kaliumfluorid durch Äthylendiamintetraessigsäure substituiert wird. Die Amylose-Harnstoff-Mischung wird wegen ihrer Unlöslichkeit in Wasser durch Lösen von 1 g Amylose in 4 g geschmolzenen Harnstoffs hergestellt. Die Mischung wird gekühlt, und die ausgehärtete Masse wird dann gemahlen und 2 g für die Druckfarbe benutzt. Die gedruckten Markierungen sind purpurn.

Beispiel IV

Eine Druckfarbe wird hergestellt durch Lösen von 10 g Kaliumbromid, 1 g Trimethylphenylammoniumjodid, 1 g des Natriumsalzes der Äthylendiamintetraessigsäure, 1 g Chininhydrochlorid und 0,5 g Ammoniumnitrat in 100 ml Wasser. Durch Zugabe von Natriumhydroxid wird die Flüssigkeit auf einen pH-Wert von etwa 8 eingestellt. In diesem Beispiel wird das Ammoniumnitrat als Härtungs- und Oxidationsmittel der Unreinheiten des Papiers und zum Verstärken der Dunkelheit der Druckzeichen verwandt.

Die so hergestellte Druckfarbe wird auf gewöhnliches Papier aufgebracht und wie in den vorangehenden Beispielen behandelt. Das Ergebnis sind tiefschwarze Druckzeichen.

Die Druckfarben gemäß der vorliegenden Erfindung haben den Vorteil, auf der Basis von Wasser hergestellt zu sein. Sie sind nicht giftig, können auf gewöhnlichem Papier benutzt werden, und das Drucken kann mit hoher Geschwindigkeit erfolgen, z.B. mit 20 Mikrosekunden pro Punkt.

**Patentansprüche**

1. In Wasser gelöste elektrochrome Druckfarbe enthaltend

a) ein Jodid als farbbildendes Agens,
b) ein Bromid zum Katalysieren der Oxidation des genannten Jodids,
c) eine Verbindung, die mit dem bei der Oxidation gebildeten Jod ein Clathrat bildet und
d) einen Verfärbungsinhibitor aus der Gruppe von Koliumfluorid, Natriumfluorid, Ammoniumfluorid und den Salzen der Athylendiamintetraessigsäure.

2. Druckfarbe nach Patentanspruch 1, dadurch gekennzeichnet, daß das Jodid aus der Gruppe von Kaliumjodid, Natriumjodid, Ammoniumjodid, Trimethylphenylammoniumjodid, Acetylcholinjodid und Propionylcholinjodid gewählt ist.

3. Druckfarbe nach Patentanspruch 1, dadurch gekennzeichnet, daß das Bromid aus der Gruppe von Ammoniumbromid, Kaliumbromid und Natriumbromid gewählt ist.

4. Druckfarbe nach Patentanspruch 1, dadurch gekennzeichnet, daß die das Clathrat bildende Verbindung aus der Gruppe von Harnstoff, Amylose, Chinin, Natriumphenylborat und Natriumbiphenylphosphat gewählt ist.

5. Druckfarbe nach Patentanspruch 3, dadurch gekennzeichnet, daß das Molverhältnis von Bromid zu Jodid zwischen 5 zu 1 und 50 zu 1 liegt.

6. Druckfarbe nach Patentanspruch 1, dadurch gekennzeichnet, daß der Anteil der das Clathrat bildenden Verbindung zwischen 0,2 und 5 Gewichtsprozent, bezogen auf das Gesamtgewicht der Lösung, beträgt.

7. Druckfarbe nach Patentanspruch 1, dadurch gekennzeichnet, daß der Anteil der Entfärbungsinhibitor-Verbindung zwischen 1 und 10 Gewichtsprozent, bezogen auf das Gesamtgewicht der Lösung, beträgt.

8. Druckfarbe nach Patentanspruch 1, dadurch gekennzeichnet, daß sie einen Farbverstärker aus der Gruppe von Leuko-methylenblau, Leuko-kristallviolett und 4,4'-Methylenbis-N-N'-dimethylanilin enthält.

9. Verfahren zum Drucken mit elektrochromer Druckfarbe gemäß einem oder mehreren der Patentansprüche 1 bis 8, gekennzeichnet durch die folgenden Schritte:

a) Aufbringen der Druckfarbe auf einen Aufzeichnungsträger,
b) Anlegen einer elektrischen Spannung in einem vorgegebenen Muster senkrecht zur Fläche des Aufzeichnungsträgers.

**Revendications**

1. Encre d'impression électro-chimique dissoute dans l'eau comportant:

— un iodure servant d'agent de coloration,
— un composé de bromure servant à catalyser l'oxidation dudit iodure,
— un composé qui forme un composé d'insertion avec l'iode obtenu par oxydation,
— un agent inhibiteur de décoloration choisi dans le group constitué par le fluorure de potassium, le fluorure de sodium, le fluorure d'ammonium et les sels d'acide diamine éthylène tétraacétique.

2. Encre d'impression selon la revendication 1, caractérisée en ce que l'iodure est choisi dans le groupe constitué par l'iodure de potassium, l'iodure de sodium, l'iodure d'ammonium, l'iodure d'acétilcholine, et l'iodure de proprionylcholine.

3. Encre d'impression selon la revendication 1, caractérisée en ce que le bromure est choisi dans le groupe constitué par le bromure d'ammonium, le bromure de potassium et le bromure de sodium.

4. Encre d'impression selon la revendication 1, caractérisée en ce que le composé formant le composé d'insertion est choisi dans le groupe constitué par l'urée, l'amylose, la quinine, et le borate de phenyl-sodium.

5. Encre d'impression selon la revendication 1, caractérisée en ce le rapport molaire bromure/iodure se situe entre 5:1 et 50:1.

6. Encre d'impression selon la revendication 1, caractérisée en ce que le pourcentage pondéral du composé constituant le composé d'insertion se situe, pour le poids total de la solution, entre 0,2 et 5.

7. Encre d'impression selon la revendication 1, caractérisée en ce que le pourcentage pondéral du composé servant d'agent inhibiteur de décoloration se situe, pour le poids total de la solution, entre 1 et 10.

8. Encre d'impression selon la revendication 1, caractérisée en ce qu'elle contient un renforçateur de coloration qui est choisi dans le groupe constitué par le leuco-bleu de méthylène, le leuco-violet cristallin et le 4-4' méthylène bis N-N' dimethylaniline.

9. Procédé d'impression à l'aide d'une encre d'impression selon une ou plusieurs revendications 1 à 8, caractérisé en que:

— on dépose ladite encre d'impression sur un support d'impression, puis
— on applique une tension électrique selon une configuration prédéterminée perpendiculaire à la surface du support d'impression.

## Claims

1. Electrochromic printing ink dissolved in water, comprising

a) an iodide compound as a colour-forming agent;
b) a bromide compound for catalyzing the oxidation of said iodide compound;
c) a compound which forms a clathrate with the iodine formed from the oxidation;
d) a discoloration inhibiting compound from the group consisting of potassium fluoride, sodium fluoride, ammonium fluoride and the salts of the ethylene diamine tetraacetic acid.

2. Printing ink according to claim 1, characterized in that the iodide is selected from the group consisting of potassium iodide, sodium iodide, ammonium iodide, trimethyl phenyl ammonium iodide, acetyl choline iodide and propionyl choline iodide.

3. Printing ink according to claim 1, characterized in that the bromide is selected from the group consisting of ammonium bromide, potassium bromide and sodium bromide.

4. Printing ink according to claim 1, characterized in that the compound forming the clathrate is selected from the group consisting of urea, amylose, quinine, sodium phenyl borate, and sodium biphenyl phosphate.

5. Printing ink according to claim 3, characterized in that the molar ratio of bromide with respect to iodide is between 5:1 and 50:1.

6. Printing ink according to claim 1, characterized in that the clathrate forming compound is present in the amount of between 0,2 and 5% by weight with respect to the total weight of the solution.

7. Printing ink according to claim 1, characterized in that the discoloration inhibiting compound is present in the amount of between 1 and 10% by weight with respect to the total weight of the solution.

8. Printing ink according to claim 1, characterized in that it comprises a colour enhancing agent selected from the group consisting of leuco methylene blue, leuco crystal violet and 4,4' methylene bis N-N' dimethylaniline.

9. Method for printing with electrochromic printing ink according to one or several of claims 1 through 8, characterized by the following steps:

a) applying the printing ink onto a record carrier,
b) applying an electrical potential in a predetermined pattern orthogonally with respect to the plane of the record carrier.